(19) Europäisches Patentamt European Patent Office Office européen des brevets

(11) **EP 3 652 126 B1**

(12) **FASCICULE DE BREVET EUROPEEN**

(45) Date de publication et mention
de la délivrance du brevet:
**29.04.2026 Bulletin 2026/18**

(21) Numéro de dépôt: **18752575.3**

(22) Date de dépôt: **10.07.2018**

(51) Classification Internationale des Brevets (IPC):
*C04B 28/00* (2006.01)    *C04B 28/26* (2006.01)
*C04B 7/24* (2006.01)    *C04B 7/32* (2006.01)
*C04B 103/00* (2006.01)

(52) Classification Coopérative des Brevets (CPC):
(C-Sets disponibles)
**C04B 7/24; C04B 7/32; C04B 28/006; C04B 28/26;**
C04B 2103/0088; C04B 2111/00215; Y02P 40/10
(Cont.)

(86) Numéro de dépôt international:
**PCT/FR2018/051729**

(87) Numéro de publication internationale:
**WO 2019/012218 (17.01.2019 Gazette 2019/03)**

(54) **NOUVEAU MATÉRIAU DE CONSTRUCTION PRÉPARÉ À PARTIR D'UN NOUVEAU MATÉRIAU POUZZOLANIQUE**

AUS EINEM NEUEN PUZZOLANSTOFF HERGESTELLTER NEUER BAUSTOFF

NEW CONSTRUCTION MATERIAL PREPARED FROM A NEW POZZOLANIC MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.07.2017 FR 1756541**

(43) Date de publication de la demande:
**20.05.2020 Bulletin 2020/21**

(73) Titulaire: **Vicat**
**38080 L'Isle-d'Abeau (FR)**

(72) Inventeurs:
• **BARNES-DAVIN, Laury**
**38500 Voiron (FR)**
• **MARTINAGE, Olivier**
**69003 Lyon (FR)**
• **MATHIEU, Eric**
**38300 Bourgoin-Jallieu (FR)**

(74) Mandataire: **Germain Maureau**
**12, rue Boileau**
**69006 Lyon (FR)**

(56) Documents cités:
EP-A1- 0 709 354    EP-A2- 0 199 941
WO-A1-90/03957    CN-A- 101 412 596
CN-A- 102 249 582    GB-A- 931 207
JP-A- H05 208 856    US-A- 4 366 255

(52) Classification Coopérative des Brevets (CPC):
(Cont.)

C-Sets
**C04B 28/006, C04B 14/041, C04B 20/008;**
**C04B 28/006, C04B 14/303, C04B 20/008;**
**C04B 28/26, C04B 7/32**

**Description**

La présente invention a pour objet un nouveau matériau de construction préparé à partir d'un nouveau matériau pouzzolanique.

La fabrication des liants hydrauliques, et notamment celle des ciments, consiste essentiellement en une calcination d'un mélange de matières premières judicieusement choisies et dosées, aussi désigné par le terme de « cru ». La cuisson de ce cru donne un produit intermédiaire, le clinker, qui, broyé avec d'éventuels ajouts minéraux, donnera du ciment. Le type de ciment fabriqué dépend de la nature et des proportions des matières premières ainsi que du procédé de cuisson. On distingue plusieurs types de ciments : les ciments Portland (qui représentent la très grande majorité des ciments produits dans le monde), les ciments alumineux (ou d'aluminate de calcium), les ciments prompts naturels, les ciments sulfo-alumineux, les ciments sulfo-bélitiques et d'autres variétés intermédiaires.

Les ciments les plus répandus sont les ciments Portland (CEM I). Les ciments Portland sont obtenus à partir de clinker Portland, obtenus après clinkérisation à une température de l'ordre de 1450°C d'un cru riche en carbonate de calcium dans un four. La production d'une tonne de ciment Portland s'accompagne de l'émission de très importantes quantités de $CO_2$ (environ 0,8 à 0,9 tonnes de $CO_2$ par tonne de ciment).

Or, en 2014, la quantité de ciment vendu dans le monde avoisinait les 4.2 milliards de tonnes (source : Syndicat Français de l'Industrie Cimentière - SFIC). Ce chiffre, en constante augmentation, a plus que doublé en 15 ans. L'industrie du ciment est donc aujourd'hui à la recherche d'une alternative valable au ciment Portland, c'est-à-dire de ciments présentant au moins les mêmes caractéristiques de résistance et de qualité que les ciments Portland, mais qui, lors de leur production, dégagent moins de $CO_2$.

Lors de la production du clinker, principal constituant du ciment Portland, le dégagement de $CO_2$ est lié :

- à hauteur de 40% au chauffage du four de cimenterie, au broyage et au transport ;
- à hauteur de 60% au $CO_2$ dit chimique, ou de décarbonatation.

La décarbonatation est une réaction chimique qui a lieu lorsque l'on chauffe du calcaire, principale matière première pour la fabrication du ciment Portland, à haute température. Le calcaire se transforme alors en chaux vive et en $CO_2$ selon la réaction chimique suivante :

$$CaCO_3 \rightarrow CaO + CO_2$$

Pour réduire les émissions de $CO_2$ liées à la production du ciment Portland, plusieurs approches ont été envisagées jusqu'à présent :

- l'adaptation ou la modernisation des procédés cimentiers afin de maximiser le rendement des échanges thermiques ;
- le développement de nouveaux liants « bas carbone » tels que les ciments sulfo-alumineux préparés à partir de matières premières moins riches en calcaire et à une température de cuisson moins élevées, ce qui permet une diminution des émissions $CO_2$ de 35% environ ;
- ou encore la substitution (partielle) du clinker dans les ciments par des matériaux permettant de limiter les émissions de $CO_2$.

Parmi les approches ci-dessus, celle de la substitution (partielle) du clinker dans les ciments a fait l'objet de nombreux développements. Deux voies ont été principalement explorées la substitution du clinker par du filler calcaire et la substitution du clinker par des matériaux dits « pouzzolaniques »
La substitution du clinker par du filler (c'est-à-dire un matériau inactif) calcaire a essentiellement un effet de dilution et s'accompagne d'une baisse importante des résistances, ce qui est très problématique.

En revanche, la substitution du clinker par des matériaux actifs ou « pouzzolaniques » s'accompagne d'une diminution bien moindre des résistances et pour certains d'entre eux d'une augmentation de celles-ci.

Un matériau pouzzolanique désigne généralement tout matériau possédant des « propriétés pouzzolaniques », c'est-à-dire apte à se combiner à température ambiante et en présence d'eau avec la chaux ou la Portlandite formée lors de l'hydratation du ciment pour donner des hydrates très peu solubles susceptibles de générer des résistances supplémentaires à long terme.

Le ciment Portland est en effet principalement constitué de deux types de phases anhydres : les silicates de calcium ($C_3S$ et $C_2S$ - dans lesquelles C représente CaO et S représente $SiO_2$) et les aluminates de calcium ($C_2A$ et $C_4AF$ - dans lesquelles C représente CaO, A représente $Al_2O_3$ et F représente $Fe_2O_3$). Il contient également de la chaux libre en faible quantité.

C'est l'hydratation des phases silicates qui génère les résistances grâce à la formation d'hydrates de type gel : les silicates de calcium hydratés C-S-H selon les équations suivantes (non équilibrées) :

$$C_3S + H \rightarrow C\text{-}S\text{-}H + CH$$

$$C_2S + H \rightarrow C\text{-}S\text{-}H + CH$$

dans lesquelles C représente $CaO$, S représente $SiO_2$ et H représente $H_2O$.

La portlandite « CH » est un coproduit de l'hydratation des silicates de calcium. Elle représente entre 15 et 20% en masse du ciment complètement hydraté dans le cas d'un CEM I et ne contribue pas aux résistances.

Le matériau pouzzolanique est une source de silice et/ou d'alumine amorphe et très réactive. Lorsqu'il est mélangé au ciment, il va réagir avec la portlandite pour former de nouveaux hydrates :

$$A,S + CH \rightarrow C\text{-}A\text{-}S\text{-}H$$

dans laquelle A représente $Al_2O_3$, C représente $CaO$, S représente $SiO_2$ et H représente $H_2O$.

La réaction pouzzolanique, plus lente et plus tardive, permet donc de consommer la portlandite qui n'apporte pas de résistance pour former des C-S-H secondaires ou tardifs généralement plus riches en alumine que les C-S-H issus des silicates, on les note en général C-A-S-H pour cette raison. Comme les C-S-H, les C-A-S-H sont des hydrates peu ou pas cristallisés qui viennent fermer la porosité et génèrent une augmentation des résistances à plus long terme.

A la date de la présente invention, différents matériaux pouzzolaniques sont utilisés :

- les pouzzolanes dites « naturelles » qui sont des roches volcaniques riches en silice et alumine naturellement amorphes ;
- les cendres volantes issues de la production d'électricité dans les centrales thermiques au charbon et essentiellement constituées de silice, d'alumine et d'oxyde de fer ;
- la fumée de silice provenant de la réduction du quartz par du charbon lors de la production de silicium et d'alliages fer/silicium ;
- le laitier de haut-fourneau, obtenu dans l'industrie sidérurgique lors de la production de la fonte, presqu'intégralement amorphe constitué de silice, alumine mais également calcium et oxyde de magnésium ; et
- les argiles calcinées qui sont des pouzzolanes de synthèses obtenues par la calcination à 600°C d'argiles kaoliniques.

La pouzzolanicité de ces matériaux demeure néanmoins variable, et la résistance des matériaux de construction préparés à partir de ces matériaux pouzzolaniques est parfois significativement inférieure à celle des matériaux de construction préparés à partir des ciments Portland classiques. Il demeure donc intéressant d'identifier de nouveaux matériaux pouzzolaniques permettant la préparation de matériaux de construction possédant une résistance à moyen et long terme comparable à celle des matériaux de construction préparés à partir des ciments Portland, tout en limitant significativement les émissions de $CO_2$ lors de leur préparation.

La bauxite est une roche latéritique riche en aluminium, en particulier en oxydes et hydroxydes d'aluminium :

➢ boehmite : $\gamma$-AlO(OH)
➢ gibbsite : $\gamma$-Al(OH)$_3$;
➢ bayerite : $\alpha$-Al(OH)$_3$;
➢ diaspore : $\alpha$-AlO(OH) ; et
➢ corindon : $\alpha$-Al$_2$O$_3$.

La bauxite peut également contenir :

- du fer, en particulier en oxydes et hydroxydes de fer :

➢ goethite : $\alpha$-FeO(OH) ; et
➢ hématite : $\alpha$-Fe$_2$O$_3$.

- et/ou de la kaolinite $Al_2Si_2O_5(OH)_4$ (ou $AS_2H_2$ dans laquelle A représente $Al_2O_3$, S représente $SiO_2$ et H représente $H_2O$) en association avec la gibbsite ou la boehmite.

La bauxite est principalement utilisée pour la production de l'aluminium via le procédé Bayer (développé en 1887). Néanmoins, dans ce procédé seules des bauxites très riches en aluminium, et donc avec peu d'impuretés (oxyde de fer (hématite, goethite) et kaolinite), sont utilisées. A l'inverse, les bauxites trop riches en fer et/ou en silice situées au toit ou au mur des filons de bauxite sont inutilisables dans ce procédé et sont souvent laissées de côté.

CN101412596 décrit un matériau polymère silicium-aluminium comprenant 60% à 90% de déchets issus de la calcination de la bauxite (e.g. boues rouges), 10% à 40% de laitier et 20% à 80% (par rapport au poids total de résidus de bauxite calcinée et de laitier) de verre soluble et son utilisation pour réduire la quantité de ciment Portland dans les compositions cimentaires classiquement utilisées. Ce document ne fait aucune mention de l'utilisation de bauxite calcinée mais uniquement de l'utilisation de déchets générés durant la calcination de la bauxite (e.g. boues rouges).

Or, il a maintenant été trouvé de façon tout à fait surprenante que les bauxites riches en fer et/ou en silice, une fois calcinées à faible température (e.g. 700°C) pouvaient être utilisées comme matériau pouzzolanique dans des matériaux de construction, lesquels possèdent une résistance à moyen et long terme comparable à celle des matériaux de construction préparés à partir des ciments Portland classiques, et peuvent être préparés en limitant significativement les émissions de $CO_2$. En outre, ces matériaux de construction présentent des caractéristiques techniques distinctives en comparaison des matériaux de constructions déjà connus, notamment ceux préparés à partir de matériaux pouzzolaniques déjà connus.

Ainsi, la présente invention a pour objet un matériau de construction choisi comme étant un ciment ou un géopolymère sous forme de poudre contenant comme ajout pouzzolanique ou précurseur de géopolymère une bauxite calcinée comprenant :

- de 10% à 95% (p/p) d'$Al_2O_3$;
- de 5% à 50% (p/p) de $SiO_2$;
- de 0% à 35% (p/p) de CaO;
- de 0% à 25% (p/p) de $Fe_2O_3$; et
- de 0% à 8% (p/p) de $TiO_2$;

ledit matériau de construction contenant au moins 1,5% (p/p) de CaO et 1% à 80% (p/p) des particules ayant un diamètre inférieur ou égal à 150 $\mu$m contiennent :

- au moins 25% (p/p) d'$Al_2O_3$;
- moins de 60% (p/p) de CaO ; et
- au moins 5% (p/p) de $SiO_2$, le rapport en poids $SiO_2/Al_2O_3$ étant inférieur à 1,2.

Le matériau de construction selon la présente invention, préparé à partir de bauxite riche en fer et/ou en silice calcinées à faible température (e.g. 700°C) possède une résistance à court, moyen et long terme comparable à celle des matériaux de construction préparés à partir des ciments Portland classiques, et peut être préparé en limitant significativement les émissions de $CO_2$.

Dans le cadre de la présente invention :

- on entend par « géopolymère » tout matériau aluminosilicate alcalin, matériau alcali-activé ou polymère inorganique, obtenu par la réaction d'un précurseur aluminosilicate et d'une solution d'activation constituée d'un silicate de sodium ou potassium et de soude ou potasse, ou d'acide phosphorique. La solution d'activation permet la dissolution du précurseur aluminosilicate en monomères aluminates et silicates qui polycondensent en un matériau inorganique.
- on entend par « bauxite » toute matière minérale naturelle riche en alumine et susceptible de contenir en outre des oxydes et hydroxydes de fer, de la kaolinite et/ou du quartz ;
- on entend par « matériau pouzzolanique » tout matériau possédant des propriétés pouzzolaniques au sens de la norme européenne NF EN 197-1, c'est-à-dire apte à se combiner à température ambiante et en présence d'eau avec la chaux ou la Portlandite formée lors de l'hydratation du ciment pour donner des hydrates très peu solubles susceptibles de générer des résistances supplémentaires à long terme ; et
- on entend par « précurseur de géopolymère » tout matériau susceptible d'être solubilisé par une solution d'activation constituée d'un silicate de sodium ou potassium et de soude ou potasse, ou d'acide phosphorique, en monomères aluminates et silicates pouvant conduire à un géopolymère par polycondensation. Parmi les exemples de tels précurseurs, on peut notamment citer le métakaolin, les cendres volantes ou le laitier.

Dans le cadre de la présente invention, le diamètre médian ou d50 correspond au diamètre en-dessous duquel se trouve 50% de la masse totale des particules de l'échantillon considéré. Celui-ci peut être déterminé par toute méthode connue de l'homme du métier, notamment par granulométrie laser en voie sèche ou humide.

Dans le cadre de la présente invention, le diamètre des particules peut être déterminé par toute méthode connue de l'homme du métier, notamment par microscopie électronique à balayage, morphogranulométrie ou par granulométrie laser.

Enfin, dans le cadre de la présente invention, les proportions exprimées en % correspondent à des pourcentages massiques par rapport au poids total de l'entité considérée.

La présente invention a donc pour objet un matériau de construction sous forme de poudre contenant au moins 1,5% de CaO et dans lequel 1% à 80% des particules ayant un diamètre inférieur ou égal à 150 $\mu$m possèdent les caractéristiques chimiques décrites ci-avant. De préférence, la présente invention a pour objet un matériau de construction tel que défini précédemment dans lequel les caractéristiques suivantes sont choisies seules ou en combinaison :

- le matériau de construction comprend au moins 3% de CaO, de préférence au moins 5% de CaO, de préférence encore au moins 10% de CaO ;
- la proportion des particules considérées est de 1% à 70%, de préférence 1% à 60%, de préférence encore 1% à 50% ;
- le diamètre des particules considérées est inférieur ou égal à 120 $\mu$m, de préférence inférieur ou égal à 100 $\mu$m, de préférence encore inférieur ou égal à 90 $\mu$m ;
- les particules considérées contiennent au moins 30% d'$Al_2O_3$, de préférence au moins 35% d'$Al_2O_3$;
- les particules considérées contiennent au plus 50% de CaO, de préférence encore de 1% à 50% de CaO, de façon tout à fait préférée de 1% à 45% de CaO ;
- les particules considérées contiennent du $SiO_2$, le rapport en poids $SiO_2/Al_2O_3$ étant inférieur à 1, de préférence inférieur à 0,8 ;
- les particules considérées contiennent au moins 10% de $SiO_2$, de préférence au moins 15% de $SiO_2$;
- les particules considérées contiennent en outre jusqu'à 20% de $Fe_2O_3$; et/ou
- les particules considérées contiennent en outre jusqu'à 5% de $TiO_2$.

Le matériau de construction selon la présente invention est donc préparé à partir de bauxite riche en fer et/ou en silice calcinée à basse température.

La bauxite utilisée dans le cadre de la présente invention contient (avant calcination) :

- de 10% à 85% d'$Al_2O_3$;
- de 5% à 40% de $SiO_2$;
- de 0% à 30% de CaO;
- de 0% à 20% de $Fe_2O_3$; et
- de 0% à 5% de $TiO_2$.

La bauxite décrite précédemment est ensuite calcinée à basse température selon le procédé suivant :

- séchage puis broyage de la bauxite jusqu'à atteindre un diamètre médian inférieur à 25 $\mu$m ;
- calcination du matériau obtenu à une température comprise entre 500 et 800°C à l'aide d'un calcinateur rotatif ou flash durant 1 seconde (flash) à 1h (rotatif) ; et
- éventuelle déagglomération, par exemple par broyage.

La composition chimique de la bauxite ainsi calcinée est modifiée, celle-ci comprenant :

- de 10% à 95% d'$Al_2O_3$;
- de 5% à 50% de $SiO_2$;
- de 0% à 35% de CaO ;
- de 0% à 25% de $Fe_2O_3$; et
- de 0% à 8% de $TiO_2$.

La bauxite calcinée décrite ci-dessus est utilisée comme matériau pouzzolanique pour préparer les matériaux de construction selon l'invention. Pour ce faire, l'homme du métier peut utiliser tout procédé connu pour préparer un ciment ou un géopolymère.

Dans le cadre de la présente invention, les bauxites calcinées décrites précédemment sont donc utilisées pour la première fois comme matériau pouzzolanique ou comme précurseur de géopolymère. Ainsi, la présente invention a également pour objet l'utilisation d'une bauxite calcinée comprenant :

- de 10% à 95% d'$Al_2O_3$;
- de 5% à 50% de $SiO_2$;
- de 0% à 35% de CaO ;
- de 0% à 25% de $Fe_2O_3$; et
- de 0% à 8% de $TiO_2$;

comme matériau pouzzolanique ou précurseur de géopolymère, ledit matériau pouzzolanique ou précurseur de géopolymère pouvant en particulier être utilisé pour la préparation d'un matériau de construction tel que décrit précédemment.

La présente invention peut être illustrée de façon non limitative par les exemples suivants.

## Exemple 1 - Calcination de la bauxite

Une bauxite possédant la composition chimique rapportée dans le Tableau 1 suivant est utilisée :

*Tableau 1 - Composition chimique de la bauxite avant calcination*

| SiO$_2$ | Al$_2$O$_3$ | CaO | MgO | Fe$_2$O$_3$ | TiO$_2$ | K$_2$O | P$_2$O$_5$ | Mn$_2$O$_3$ | Perte au feu |
|---|---|---|---|---|---|---|---|---|---|
| 26.7% | 37.7% | 0.5% | 0.2% | 21.0% | 1.6% | 0.2% | 0.2% | 0.1% | 11.8% |

La bauxite décrite ci-dessus est séchée durant 24h à 105°C puis broyée au broyeur à anneau jusqu'à un diamètre médian de 25 $\mu$m. La poudre ainsi préparée est cuite en four de laboratoire par lots de 200g à 600°C ou 700°C selon le cas durant 1h avec enfournement et défournement à chaud. La bauxite calcinée ainsi obtenue est ensuite à nouveau broyée légèrement au broyeur à anneaux (15 secondes, 700 tr/min) pour la désagglomérer.

La bauxite calcinée à 600°C (ci-après Bx-1) est analysée. La composition chimique de celle-ci est rapportée dans le tableau 2 ci-dessous :

*Tableau 2 - Composition chimique de la bauxite calcinée à 600°C - Bx-1*

| SiO$_2$ | Al$_2$O$_3$ | CaO | MgO | Fe$_2$O$_3$ | TiO$_2$ | K$_2$O | P$_2$O$_5$ | Mn$_2$O$_3$ | Perte au feu |
|---|---|---|---|---|---|---|---|---|---|
| 31.0% | 42.1% | 0.2% | 0.2% | 20.9% | 1.8% | 0.3% | 0.2% | 0.1% | 3.2% |

De même la bauxite calcinée à 700°C (ci-après Bx-2) est analysée. La composition chimique de celle-ci est rapportée dans le tableau 3 ci-dessous :

*Tableau 3 - Composition chimique de la bauxite calcinée à 700°C - Bx-2*

| SiO$_2$ | Al$_2$O$_3$ | CaO | MgO | Fe$_2$O$_3$ | TiO$_2$ | K$_2$O | P$_2$O$_5$ | Mn$_2$O$_3$ | Perte au feu |
|---|---|---|---|---|---|---|---|---|---|
| 31.1% | 43.1% | 0.1% | 0.2% | 21.3% | 1.9% | 0.3% | 0.2% | 0.1% | 1.7% |

## Exemple 2 - Analyse de la composition d'un matériau de construction préparé à partir de Bx-1

*Préparation du ciment 1*

Un ciment 1 est préparé par mélange de 75% d'un ciment Portland CEM I 52.5 R selon la norme EN 196-1 et de 25% de la bauxite calcinée Bx-1.

*Caractérisation par MEB couplé à une sonde EDAX*

Le ciment 1 a été tamisé à 150 $\mu$m, puis le passant a été analysé par microscopie électronique à balayage (MEB) couplé à une sonde EDAX (spectre d'émission de fluorescence X) selon le protocole suivant.

Le passant à 150 $\mu$m est inclus dans de la résine afin d'obtenir un bloc dans lequel les particules sont dispersées. Ce bloc est ensuite progressivement poli de façon à obtenir une surface miroir qui révèle un grand nombre de sections de particules.

Après métallisation au carbone, cette phase est observée au microscope électronique à balayage. Il est ainsi possible de distinguer les différents types de particules par leur couleur (niveau de gris) et leur forme.

La sonde EDAX couplée au microscope électronique permet de déterminer la composition chimique localement et est utilisée de deux façons :

- pour une approche « ponctuelle », une mesure moyenne est réalisée sur toute la section d'une particule ; et
- pour une approche statistique, un balayage de l'ensemble de l'image (ou mapping) est réalisé permettant une analyse chimique de chaque pixel de l'image. Le logiciel va alors permettre de visualiser de façon très claire les zones les plus riches en alumine ou les plus pauvres en calcium. Le logiciel permet également de regrouper les pixels ayant une chimie proche et ainsi définir des zones de chimie identique. Ce mapping permet non seulement de déterminer la chimie de la composition mais également le pourcentage de pixels que représente la zone dans l'image.

Cette approche basée sur l'analyse d'image pour caractériser une propriété vraie pour des particules sphériques est classiquement utilisée dans le domaine technique de l'invention.

*Résultats*

Le mapping décrit ci-dessus a permis d'obtenir les résultats rapportés dans le tableau 4 suivant.

*Tableau 4*

| Zone identifiée | % des pixels | $Al_2O_3$ (en % p/p) | $SiO_2$ (en % p/p) | CaO (en % p/p) |
|---|---|---|---|---|
| 1 | 2% | 3.59 | 5.40 | 41.34 |
| 2 | 6% | 23.24 | 26.89 | 30.78 |
| 3 | 8% | 19.57 | 23.19 | 16.01 |
| 4 | 3% | 17.09 | 14.15 | 0.69 |
| 5 | 0% | 3.70 | 36.02 | 3.80 |
| 6 | 6% | 17.50 | 13.10 | 19.92 |
| **7** | **5%** | **33.76** | **27.91** | **2.14** |
| **8** | **14%** | **43.82** | **45.58** | **1.10** |
| 9 | 16% | 4.27 | 19.00 | 68.33 |
| **10** | **5%** | **31.96** | **29.58** | **12.83** |
| 11 | 13% | 11.36 | 17.93 | 52.21 |
| **12** | **8%** | **53.64** | **35.17** | **0.67** |
| 13 | 6% | 12.88 | 30.68 | 22.02 |
| 14 | 9% | 11.63 | 17.78 | 37.70 |

Dans le ciment 1, 32% des particules ayant un diamètre inférieur à 150 $\mu$m contiennent

- au moins 25% d'$Al_2O_3$;
- moins de 60% de CaO ; et
- au moins 5% de $SiO_2$;

et le rapport en poids $SiO_2/Al_2O_3$ est inférieur à 1.

**Exemple 2** - **Compositions de mortier**

*Préparation des mortiers 1 à 7*

Un mortier de référence (ci-après Mortier 1) est préparé à partir d'un ciment Portland CEM I 52.5 R selon la norme EN 196-1. La composition du mortier 1 est la suivante :

- 450g de ciment CEM I 52.5 R ;
- 1350g de sable normalisé ; et
- 225g d'eau.

De manière similaire, les mortiers 2 à 7 sont préparés à partir d'un mélange 75% de CEM I 52.5 R avec respectivement :

- 25% de Bx-1 (mortier 2) ;
- 25% de Bx-2 (mortier 3) ;

- 25% de filler calcaire de St Hilaire (mortier 4) ;
- 25% d'argile calcinée commerciale (Argicem®) (mortier 5) ;
- 25% de cendres volantes (mortier 6) ; et
- 25% de laitier de haut fourneau moulu (mortier 7) ;

les autres ingrédients et leurs proportions restant inchangés.

*Résistance mécanique*

La résistance mécanique des mortiers est mesurée conformément à la norme EN 196-1 sur des éprouvettes de mortiers prismatiques 4x4x16 cm3 préparés à 20°C.

L'indice d'activité caractérise la performance du matériau pouzzolanique lorsqu'il est utilisé à 25% de substitution. Il est défini comme le rapport des résistances à la compression (mesurées comme indiqué ci-dessus) d'un mortier de ciment constitué de 75% d'un ciment référence (CEM I) et 25% de l'ajout pouzzolanique considéré, et d'un mortier préparé avec 100% de ciment référence.

$$IA\ (\%) = \frac{RC\ ciment\ substitué\ à\ 25\%}{RC\ Référence}$$

Les résultats des mesures de la résistance en compression (Rc) sont rapportés dans le Tableau 5 suivant.

|  |  | Mortier 1 (réf.) | Mortier 2 (Bx-1) | Mortier 3 (Bx-2) | Mortier 4 (Filler) | Mortier 5 (Argicem) | Mortier 6 (Cendres volantes) | Mortier 7 (Laitier) |
|---|---|---|---|---|---|---|---|---|
| Résistance à la compression (MPa) | 2 jours | 46.6 | 34 | 33.7 | 33.9 | 31.5 | 35.3 | 32.2 |
|  | 7 jours | 55.9 | 48.6 | 51.1 | 42.2 | 45.9 | 44.8 | 43.7 |
|  | 28 jours | 60.5 | 58.9 | 61.4 | 47.8 | 54.6 | 51.5 | 53.2 |
| Indice d'activité | 2 jours | - | 73.0% | 72.3% | 72.7% | 67.6% | 75.8 % | 69.1 % |
|  | 7 jours | - | 86.9% | 91.4% | 75.5% | 82.1% | 80.1 % | 82.1 % |
|  | 28 jours | - | 97.4% | 101.5% | 79.0% | 90.2% | 85.1 % | 87.9 % |

*Tableau 5*

Il apparait que les mortiers préparés à partir d'un mélange ciment Portland/bauxite calcinée (mortiers 2 et 3) possèdent une résistance mécanique comparable à celle du mortier préparé à partir du seul ciment Portland (mortier 1) et une bien meilleure résistance mécanique que les mortiers préparés à partir d'ajouts pouzzolaniques classiques (mortiers 5 à 7) ou d'ajout de type 'filler' (mortier 4).

**Exemple 3** - **Compositions de mortier**

*Préparation des mortiers 8 à 12*

Comme dans l'exemple 2, les mortiers 6 à 10 sont préparés à partir d'un mélange CEM I 52.5 R/Bx-2 dans les proportions suivantes :

- 90/10 (mortier 8) ;
- 80/20 (mortier 9) ;
- 70/30 (mortier 10) ;
- 60/40 (mortier 11) ; et
- 50/50 (mortier 12) ;

les autres ingrédients et leurs proportions restant inchangés.

*Résistance mécanique*

La résistance mécanique des mortiers est mesurée sur des éprouvettes de mortiers prismatiques 4x4x16 cm3 préparés à 20°C selon la norme EN 196-1.

L'indice de performance du matériau pouzzolanique peut être défini d'une façon comparable à l'indice d'activité mais pour un taux de substitution différent de 25%. Dans le cas présent, cet indice est défini comme le rapport des résistances à la compression (mesurées comme indiqué ci-dessus) d'un mortier de ciment constitué de (100-X)% d'un ciment référence (CEM I) et X% de l'ajout pouzzolanique considéré, et d'un mortier préparé avec 100% de ciment référence.

$$IP\ (\%) = \frac{RC\ ciment\ substitué\ à\ X\ \%}{RC\ Référence}$$

Les résultats des mesures de la résistance en compression (Rc) sont rapportés dans le Tableau 6 suivant.

*Tableau 6*

| | | Mortier 1 (réf.) | Mortier 8 | Mortier 9 | Mortier 10 | Mortier 11 | Mortier 12 |
|---|---|---|---|---|---|---|---|
| **Résistance à la compression (MPa)** | **2 jours** | 40.2 | 34.9 | 32.2 | 29.7 | 22.6 | 16.4 |
| | **7 jours** | 51.6 | 52.6 | 53.1 | 48.5 | 40.2 | 31.8 |
| | **28 jours** | 60.5 | 65.0 | 63.5 | 61.7 | 56.8 | 50.1 |
| **Indice de performance (IP)** | **2 jours** | - | 86.8% | 80.1% | 73.8% | 56.2% | 40.8% |
| | **7 jours** | - | 101.9% | 102.8% | 94.0% | 77.9% | 61.6% |
| | **28 jours** | - | 106.7% | 104.3% | 101.2% | 93.3% | 82.3% |

Il apparait que les mortiers préparés à partir d'un mélange ciment Portland/bauxite calcinée dans des proportions variant de 90/10 à 70/30 (mortiers 6 à 8) possèdent une résistance mécanique comparable voire supérieure à celle du mortier préparé à partir du seul ciment Portland (mortier 1). En outre, les mortiers contenant de grande proportions de bauxite calcinée en substitution du ciment Portland (mortiers 9 et 10) présentent une résistance au moins comparable à celle des mortiers préparés à partir d'ajouts pouzzolaniques classiques mais dans des proportions bien plus faibles (mortiers 5 à 7 - exemple 2).

**Exemple 4** - **Compositions de béton**

*Préparation des bétons 1 et 2*

Un béton de référence (ci-après Béton 1) est préparé à partir d'un ciment Portland CEM I 52.5 R. La composition du béton 1 est la suivante :

- 12.3kg de ciment CEM I 52.5 R ;
- 28.9 kg de granulats 0-4mm ;
- 13.6 kg de granulats 4-11mm ;
- 22.6 kg de granulats 11-22mm ; et
- 6.8 kg d'eau de gâchage ($E_{eff}$/C = 0.50).

De manière similaire, un béton 2 est préparé à partir d'un mélange ciment Portland CEM I 52.5 R / Bx-2 dans une proportion 85/15, les autres ingrédients et leurs proportions restant inchangés.

*Résistance mécanique*

La résistance mécanique des bétons est mesurée sur des corps d'épreuve cylindriques de béton (diamètre 16cm, hauteur 32 cm) selon la norme NF EN 12390-3.

L'indice de performance d'un matériau pouzzolanique dans un béton peut être défini comme le rapport de la résistance à la compression (mesurée comme indiqué ci-dessus) de deux bétons formulés suivant la même formule béton, l'un étant préparé à partir d'un ciment constitué de ciment référence substitué à X % par le matériau pouzzolanique, et l'autre étant préparé à partir d'un ciment constitué à 100% dudit ciment référence.

$$IP\ (\%) = \frac{RC\ béton\ préparé\ avec\ ciment\ substitué\ à\ X\ \%}{RC\ béton\ préparé\ avec\ ciment\ référence\ uniquement}$$

Les résultats des mesures de la résistance en compression (Rc) sont rapportés dans le Tableau 7 suivant.

*Tableau 7*

|  |  | Béton 1 (réf.) | Béton 2 (15% Bx-2) |
|---|---|---|---|
| **Résistance à la compression (MPa)** | **2 jours** | 29.9 | 25.2 |
|  | **7 jours** | 42.4 | 41.6 |
|  | **28 jours** | 49.4 | 51.6 |
| **Indice de performance (IP)** | **2 jours** | - | 84.3% |
|  | **7 jours** | - | 98.1% |
|  | **28 jours** | - | 104.5% |

Il apparait que le béton préparé à partir d'un mélange ciment Portland/bauxite calcinée (béton 2) possède une résistance mécanique comparable voire supérieure à celle du béton préparé à partir du seul ciment Portland (béton 1) dès 7 jours.

**Exemple 5** - **Compositions de géopolymère**

*Préparation des géopolymères*

Un géopolymère 1 est préparé à partir de métakaolin (Argicem®) et d'une solution activante constituée de 80% en masse de silicate de sodium, 10% de soude et 10% d'eau. Le géopolymère 1 est formulé à partir de 100g de métakaolin Argicem® et 100ml de solution activante.

De manière similaire, un géopolymère 2 est préparé à partir de Bx-2 (à la place du métakaolin), les autres ingrédients et leurs proportions restant inchangés.

La résistance mécanique des géopolymères est mesurée sur des cubes de pate géopolymère de dimensions 20x20 mm. Les cubes sont confectionnés dans des moules en acier puis stockés pendant 24h à 20°C et 100% d'humidité. Après démoulage, les cubes sont conservés durant 5 jours supplémentaires à 20°C dans des sacs étanches contenant un fond d'eau afin de les conserver à 100% d'humidité sans les immerger totalement.

La résistance des échantillons obtenus est testée à 6 jours

Les résistances maximales de ce type de matériau sont atteintes en moins d'une semaine.

A 6 jours, le géopolymère 1 conduit à une résistance à la compression (Rc) de 37 MPa alors que le géopolymère 2 conduit à une résistance à la compression (Rc) de 68 MPa, soit près du double.

L'utilisation de bauxite calcinée comme précurseur de géopolymère permet donc de réaliser des géopolymères particulièrement performants, qui présentent en outre à 6 jours des résistances comparables à celles d'un ciment CEM I à 28 jours.

**Revendications**

**1.** Matériau de construction choisi comme étant un ciment ou un géopolymère sous forme de poudre contenant comme ajout pouzzolanique ou précurseur de géopolymère une bauxite calcinée comprenant :

- de 10% à 95% (p/p) d'$Al_2O_3$;
- de 5% à 50% (p/p) de $SiO_2$;
- de 0% à 35% (p/p) de CaO;
- de 0% à 25% (p/p) de $Fe_2O_3$; et
- de 0% à 8% (p/p) de $TiO_2$;

ledit matériau de construction contenant au moins 1,5% (p/p) de CaO et 1% à 80% (p/p) des particules dudit ciment ou géopolymère ayant un diamètre inférieur ou égal à 150 $\mu$m contenant :

- au moins 25% (p/p) d'$Al_2O_3$
- moins de 60% (p/p) de CaO; et
- au moins 5% (p/p) de $SiO_2$, le rapport en poids $SiO_2/Al_2O_3$ étant inférieur à 1,2.

2. Matériau de construction selon la revendication 1, **caractérisé en ce qu'**il contient au moins 3% (p/p) de CaO.

3. Matériau de construction selon la revendication 1 ou 2, **caractérisé en ce que** la proportion des particules considérées est de 1% à 60% (p/p).

4. Matériau de construction selon l'une quelconque des revendications 1 à 3, **caractérisé en ce que** le diamètre des particules considérées est inférieur ou égal à 100 $\mu$m.

5. Matériau de construction selon l'une quelconque des revendications 1 à 4, **caractérisé en ce que** les particules considérées contiennent au moins 30% (p/p) d'$Al_2O_3$.

6. Matériau de construction selon l'une quelconque des revendications 1 à 5, **caractérisé en ce que** les particules considérées contiennent au plus 50% (p/p) de CaO.

7. Matériau de construction selon la revendication 6, **caractérisé en ce que** les particules considérées contiennent de 1% à 50% (p/p) de CaO.

8. Matériau de construction selon l'une quelconque des revendications 1 à 7, **caractérisé en ce que** les particules considérées contiennent du $SiO_2$, le rapport en poids $SiO_2/Al_2O_3$ étant inférieur à 1.

9. Matériau de construction selon l'une quelconque des revendications 1 à 8, **caractérisé en ce que** les particules considérées contiennent au moins 10% (p/p) de $SiO_2$

10. Matériau de construction selon l'une quelconque des revendications 1 à 9, **caractérisé en ce que** les particules considérées contiennent en outre jusqu'à 20% (p/p) de $Fe_2O_3$.

11. Matériau de construction selon l'une quelconque des revendications 1 à 10, **caractérisé en ce que** les particules considérées contiennent en outre jusqu'à 5% (p/p) de $TiO_2$.

12. Utilisation d'une bauxite calcinée comprenant :

- de 10% à 95% (p/p) d'$Al_2O_3$;
- de 5% à 50% (p/p) de $SiO_2$;
- de 0% à 35% (p/p) de CaO;
- de 0% à 25% (p/p) de $Fe_2O_3$; et
- de 0% à 8% (p/p) de $TiO_2$;

comme matériau pouzzolanique ou précurseur de géopolymère pour la préparation d'un matériau de construction selon l'une des revendications 1 à 11.

**Patentansprüche**

1. Baumaterial, das als Zement oder Geopolymer in Pulverform ausgewählt ist, das als Pozzolanzusatz oder Geopolymervorläufer einen kalzinierten Bauxit enthält, umfassend:

- von 10 % bis 95 % (Gew.-%) $Al_2O_3$;
- von 5 % bis 50 % (Gew.-%) $SiO_2$;
- von 0 % bis 35 % (Gew.-%) CaO;
- von 0 % bis 25 % (Gew.-%) $Fe_2O_3$; und
- von 0 % bis 8 % (Gew.-%) $TiO_2$;

wobei das Baumaterial, das mindestens 1,5 % (Gew.-%) CaO und 1 % bis 80 % (Gew.-%) der Partikel des Zements oder Geopolymers enthält, das/der einen Durchmesser von höchstens 150 $\mu$m aufweist, Folgendes enthält:

- mindestens 25 % (Gew.-%) $Al_2O_3$;
- weniger als 60 % (Gew.-%) CaO; und
- mindestens 5 % (Gew.-%) $SiO_2$, wobei das Gewichtsverhältnis $SiO_2/Al_2O_3$ kleiner als 1,2 ist.

2. Baumaterial nach Anspruch 1, **dadurch gekennzeichnet, dass** es mindestens 3 % (Gew.-%) CaO enthält.

3. Baumaterial nach Anspruch 1 oder 2, **dadurch gekennzeichnet, dass** der Anteil der betrachteten Partikel 1 % bis 60 % (Gew.-%) beträgt.

4. Baumaterial nach einem der Ansprüche 1 bis 3, **dadurch gekennzeichnet, dass** der Durchmesser der betrachteten Partikel kleiner oder gleich 100 $\mu$m ist.

5. Baumaterial nach einem der Ansprüche 1 bis 4, **dadurch gekennzeichnet, dass** die betrachteten Partikel mindestens 30 % (Gew.-%) $Al_2O_3$ enthalten.

6. Baumaterial nach einem der Ansprüche 1 bis 5, **dadurch gekennzeichnet, dass** die betrachteten Partikel höchstens 50 % (Gew.-%) CaO enthalten.

7. Baumaterial nach Anspruch 6, **dadurch gekennzeichnet, dass** die betrachteten Partikel 1 % bis 50 % (Gew.-%) CaO enthalten.

8. Baumaterial nach einem der Ansprüche 1 bis 7, **dadurch gekennzeichnet, dass** die betrachteten Partikel $SiO_2$ enthalten, wobei das Gewichtsverhältnis $SiO_2/Al_2O_3$ kleiner als 1 ist.

9. Baumaterial nach einem der Ansprüche 1 bis 8, **dadurch gekennzeichnet, dass** die betrachteten Partikel mindestens 10 % (Gew.-%) $SiO_2$ enthalten.

10. Baumaterial nach einem der Ansprüche 1 bis 9, **dadurch gekennzeichnet, dass** die betrachteten Partikel ferner bis zu 20 % (Gew.-%) $Fe_2O_3$ enthalten.

11. Baumaterial nach einem der Ansprüche 1 bis 10, **dadurch gekennzeichnet, dass** die betrachteten Partikel ferner bis zu 5 % (Gew.-%) $TiO_2$ enthalten.

12. Verwendung von kalziniertem Bauxit, umfassend:

- von 10 % bis 95 % (Gew.-%) $Al_2O_3$;
- von 5 % bis 50 % (Gew.-%) $SiO_2$;
- von 0 % bis 35 % (Gew.-%) CaO;
- von 0 % bis 25 % (Gew.-%) $Fe_2O_3$; und
- von 0 % bis 8 % (Gew.-%) $TiO_2$;

als Pozzolan- oder Geopolymer-Vorläufermaterial zur Zubereitung eines Baumaterials nach einem der Ansprüche 1 bis 11.


**Claims**

1. A construction material selected as a cement or a geopolymer in powder form, containing, as a pozzolanic additive or a geopolymer precursor, a calcined bauxite comprising:

- from 10% to 95% by weight of $Al_2O_3$;
- from 5% to 50% by weight of $SiO_2$;
- from 0% to 35% by weight of CaO;
- from 0% to 25% by weight of $Fe_2O_3$; and
- from 0% to 8% by weight of $TiO_2$;

said construction material containing at least 1.5% by weight of CaO and from 1% to 80% by weight of particles of said cement or geopolymer having a diameter less than or equal to 150 $\mu$m containing:

- at least 25% by weight of $Al_2O_2$;
- less than 60% by weight of CaO; and
- at least 5% by weight of $SiO_2$, the weight ratio of $SiO_2/Al_2O_3$ being less than 1.2.

2. The construction material according to claim 1, **characterized in that** it contains at least 3% by weight of CaO.

3. The construction material according to claim 1 or 2, **characterized in that** the proportion of the considered particles is from 1% to 60% by weight.

4. The construction material according to any one of claims 1 to 3, **characterized in that** the diameter of the considered particles is less than or equal to 100 $\mu$m.

5. The construction material according to any one of claims 1 to 4, **characterized in that** the considered particles contain at least 30% by weight of $Al_2O_3$.

6. The construction material according to any one of claims 1 to 5, **characterized in that** the considered particles contain at most 50% by weight of CaO.

7. The construction material according to claim 6, **characterized in that** the considered particles contain from 1% to 50% by weight of CaO.

8. The construction material according to any one of claims 1 to 7, **characterized in that** the considered particles contain $SiO_2$, the weight ratio of $SiO_2/Al_2O_3$ being less than 1.

9. The construction material according to any one of claims 1 to 8, **characterized in that** the considered particles contain at least 10% by weight of $SiO_2$.

10. The construction material according to any one of claims 1 to 9, **characterized in that** the considered particles further contain up to 20% by weight of $Fe_2O_3$.

11. The construction material according to any one of claims 1 to 10, **characterized in that** the considered particles further contain up to 5% by weight of $TiO_2$.

12. A Use of a calcined bauxite comprising:

- from 10% to 95% by weight of $Al_2O_3$;
- from 5% to 50% by weight of $SiO_2$;
- from 0% to 35% by weight of CaO;
- from 0% to 25% by weight of $Fe_2O_3$; and
- from 0% to 8% by weight of $TiO_2$;

as a pozzolanic material or a geopolymer precursor for the preparation of a construction material according to any of claims 1 to 11.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 101412596